# EUROPEAN PATENT APPLICATION

(11) **EP 1 755 238 A1**
(43) Date of publication of application: **21.02.2007**
(21) Application number: 05753315.0
(22) Date of filing: 22.06.2005
(51) Int. Cl.: H04B 7/26, H04L 12/28, H04L 12/56

(54) **RADIO SYSTEM, RADIO NODE DEVICE, AND PATH CONTROL DEVICE**

(30) Priority: 24.06.2004 JP 2004186011
(71) Applicant: MATSUSHITA ELECTRIC INDUSTRIAL CO., LTD., Osaka 571-8501 (JP)
(72) Inventor: YOKOBORI, Michiru c/o Matsushita El.Ind.Co.Ltd, Chuo-ku, Osaka-shi, Osaka 540-6319 (JP); KAWAKAMI, Tetsuya c/o Matsushita El.Ind.Co.Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/011453
(87) International publication number: WO 2006/001308

(57) **Abstract**

Disclosed is a technology for a radio system, a radio node device, and a path control device which can reconfigure a path corresponding to fluctuation of a bandwidth originating from a change in the transmission environment of a radio link. According to the technology, an arbitrary radio node device in a plurality of radio node devices 200a to 200f detects the transmission state of a radio link linked to the radio node device, changes the modulation method of the radio link based on the detected transmission state of the radio link, transmits information indicating the changed modulation method and the number of paths using the radio link whose modulation method is changed to a path control device 103, and a path control device 103 detects a path which requires route changing based on the transmitted information indicating the modulation method and the number of paths using the radio link whose modulation method is changed, and decides a new path from the states of the overall radio links.

## Description

### TECHNICAL FIELD

The present invention relates to a radio system constituting a wireless LAN that multi-hops among a plurality of radio node devices which perform point-to-point radio communications, a radio node device, and a path control device.

### BACKGROUND ART

In conventional radio communications utilizing a high frequency band, attenuation originating from rainfall and radio interference has been a problem in long-range communications. Constructing a network which includes only radio nodes (hereinafter called radio node devices) can adopt a scheme of avoiding disconnection of communication by establishing radio links among the radio nodes in a full-mesh pattern, and changing a route according to the states of the radio links. Radio links are established among the respective radio nodes by directional radio transmissions in a point-to-point manner. Paths are formed among the respective radio nodes by multi-hopping. For a communication from one point to another, one or more radio links pass. While a plurality of paths can be established between two arbitrary points, a path to be used in communications is determined according to policies. The policies include, for example, simple selection of a route which has a small number of hops, QoS (Quality of Service) control, such as securing a band or balancing a load, and avoidance of a rainfall area. Control which satisfies all policies may be performed, or control may be performed selectively. A conventional technique of deciding a path based on policies is disclosed in Patent Document 1 described below.

The conventional technique disclosed in Patent Document 1 compares spatial correlation values path by path, and changes a route to a path having a small spatial correlation when a path in use has a poor transmission property. This scheme avoids communication disconnection by ensuring a steady modulation method for radio links, and finding a path having less external factors, such as rainfall and radio interference. Although the external factors affect the transmission rate of a radio link, the technique disclosed in Patent Document 1 enables stable communications at a high transmission rate if the transmission environment is good. When transmission with a modulation method having a large multi-value number is kept even if the transmission environment becomes worse, an error rate increases, so that the transmission path may become useless. That is, keeping the modulation method of transmission steady leads to continued inefficient transmission with respect to a change in transmission environment. At present, there is a technique called "adaptive modulation" which changes a modulation method in accordance with a change in transmission environment. Using this technique can suppress an increment in an error rate as slow modulation is performed when the transmission environment becomes worse, thereby avoiding rapid deterioration of the communication quality. When the transmission environment is good, the transmission rate is made faster by performing fast modulation. The technique is necessary to enable wideband and stable communications using radio transmission dependent on external factors.
Patent Document 1: Japanese Patent Application Publication No. 2003-69620 (paragraphs 0015, 0016)

In public networks, however, because a radio link is shared by multiple users, when slow modulation is performed, an occupied band per user is naturally reduced. In normal IP networks, route control of selecting the shortest route is performed by comparing costs computed from the bandwidths of radio links. Because this scheme takes the use for wired networks into account, however, there is a problem such that while the scheme can dynamically cope with disconnection of a line, and a change in a network like a change in topology, it cannot optimally cope with fluctuation of the bandwidth originating from a change in transmission environment which is inherent to radio links.

### DISCLOSURE OF THE INVENTION

The present invention has been made to overcome the aforementioned problems, and it is an object of the invention to provide a radio system, a radio node device, and a path control device which can reconfigure a path corresponding to fluctuation of a bandwidth originating from a change in the transmission environment of a radio link.

To achieve the object, according to the invention, there is provided a radio system comprising a plurality of radio node devices and a path control device which controls path constituting based on transmission states of radio links among the plurality of radio node devices, and performing multi-hop communication among the plurality of radio node devices, wherein an arbitrary radio node device in the plurality of radio node devices detects the transmission state of the radio link linked to the arbitrary radio node device, changes a modulation method of the radio link based on the detected transmission state of the radio link, and transmits information indicating the changed modulation method and the number of paths using the radio link whose modulation method is changed to the path control device, and the path control device detects a path which requires route changing based on the transmitted information indicating the modulation method and the number of paths using the radio link whose modulation method is changed, and decides a new path from states of the overall radio links. This structure can reconfigure a path corresponding to fluctuation of a bandwidth originating from a change in the transmission environment of a radio link.

According to the invention, there is provided a radio system comprising a plurality of radio node devices and a path control device which controls path constituting based on transmission states of radio links among the plurality of radio node devices, and performing multi-hop communication among the plurality of radio node devices, wherein an arbitrary radio node device in the plurality of radio node devices detects the transmission state of the radio link linked to the arbitrary radio node device, and transmits information on the detected transmission state of the radio link and the number of paths using the radio link whose transmission state is detected to the path control device, and the path control device detects a path which requires route changing based on the transmitted information on the transmission state of the radio link and the number of paths using the radio link whose transmission state is detected, and decides a new path from states of the overall radio links. This structure can reconfigure a path corresponding to fluctuation of a bandwidth originating from a change in the transmission environment of a radio link.

According to the invention, there is provided an arbitrary radio node device in a plurality of radio node devices in a radio system which includes the plurality of radio node device, and a path control device controlling path constituting based on transmission states of radio links among the plurality of radio node devices, and performs multi-hop communication among the plurality of radio node devices, comprising detection means that detects the transmission state of the radio link linked to the arbitrary radio node device; change means that changes a modulation method of the radio link based on the transmission state of the radio link detected by the detection means; and transmission means that transmits information indicating the modulation method changed by the change means, and the number of paths using the radio link whose modulation method is changed to the path control device. This structure can reconfigure a path corresponding to fluctuation of a bandwidth originating from a change in the transmission environment of a radio link.

According to the invention, there is provided an arbitrary radio node device in a plurality of radio node devices of a radio system which includes the plurality of radio node device, and a path control device controlling path constituting based on transmission states of radio links among the plurality of radio node devices, and performs multi-hop communication among the plurality of radio node devices, comprising detection means that detects the transmission state of the radio link linked to the arbitrary radio node device; and transmission means that transmits information on the transmission state of the radio link detected by the detection means, and the number of paths using the radio link whose transmission state is detected to the path control device. This structure can reconfigure a path corresponding to fluctuation of a bandwidth originating from a change in the transmission environment of a radio link.

According to the invention, there is provided a path control device in a radio system which includes a plurality of radio node devices and the path control device controlling path constituting based on transmission states of radio links among the plurality of radio node devices, and performs multi-hop communication among the plurality of radio node devices, comprising reception means that receives information indicating a modulation method of the radio link changed based on the transmission state of the radio link linked to the radio node device and the number of paths using the radio link whose modulation method is changed from the radio node device; and control means that detects a path which requires route changing based on the received information indicating the modulation method and the number of paths using the radio link whose modulation method is changed, and decides a new path from states of the overall radio links. This structure can reconfigure a path corresponding to fluctuation of a bandwidth originating from a change in the transmission environment of a radio link.

According to the invention, there is provided a path control device in a radio system which includes a plurality of radio node devices and the path control device controlling path constituting based on transmission states of radio links among the plurality of radio node devices, and performs multi-hop communication among the plurality of radio node devices, comprising reception means that receives from the radio node device information on the transmission state of the radio link, linked to the radio node device and detected by the radio node device, and the number of paths using the radio link whose transmission state is detected; and control means that detects a path which requires route changing based on the information on the transmission state of the radio link and the number of paths using the radio link whose transmission state is detected, received by the reception means, and decides a new path from states of the overall radio links. This structure can surely change status information which changes according to connection.

The radio system, radio node device and path control device of the invention have the foregoing structures, and can reconfigure a path corresponding to fluctuation of a bandwidth originating from a change in the transmission environment of a radio link.

### BRIEF DESCRIPTION OF DRAWINGS

[FIG. 1] A diagram for explaining the structure of a radio system according to an embodiment of the invention.
[FIG. 2] A sequence chart for explaining an example of the flow of path constituting in the radio system of the embodiment of the invention.
[FIG. 3] A diagram for explaining the structure of a radio node according to the embodiment of the invention.
[FIG. 4] A flowchart for explaining an example of the flow of a process of changing a modulation method of the radio node of the embodiment of the invention.
[FIG. 5] A diagram for explaining the structure of a path control device according to the embodiment of the invention.
[FIG. 6] A flowchart for explaining an example of a process flow associated with path change in the path control device according to the embodiment of the invention.

### BEST MODE FOR CARRYING OUT THE INVENTION

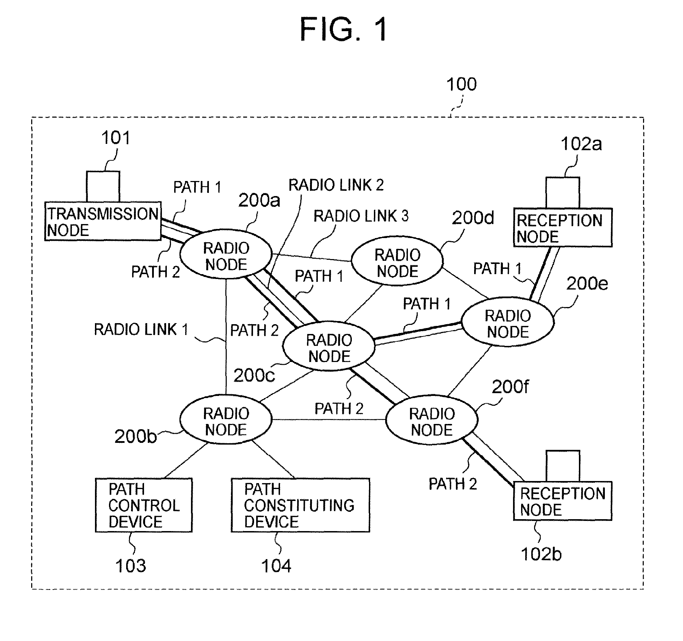

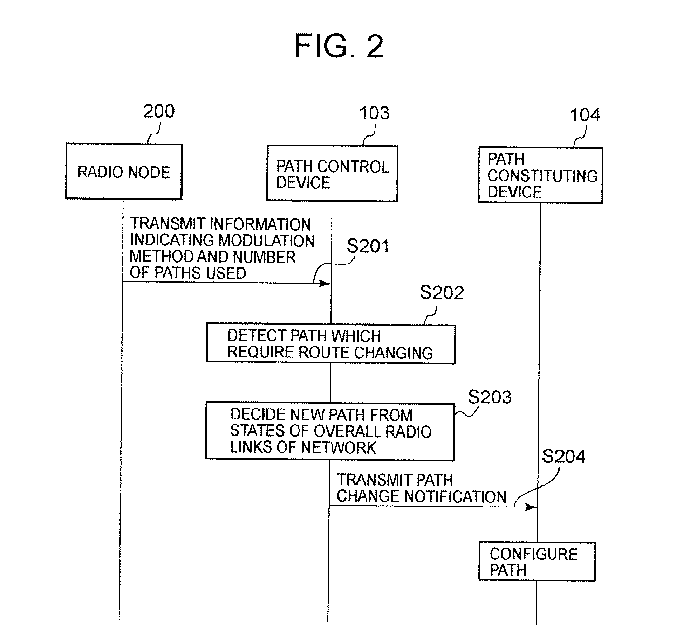

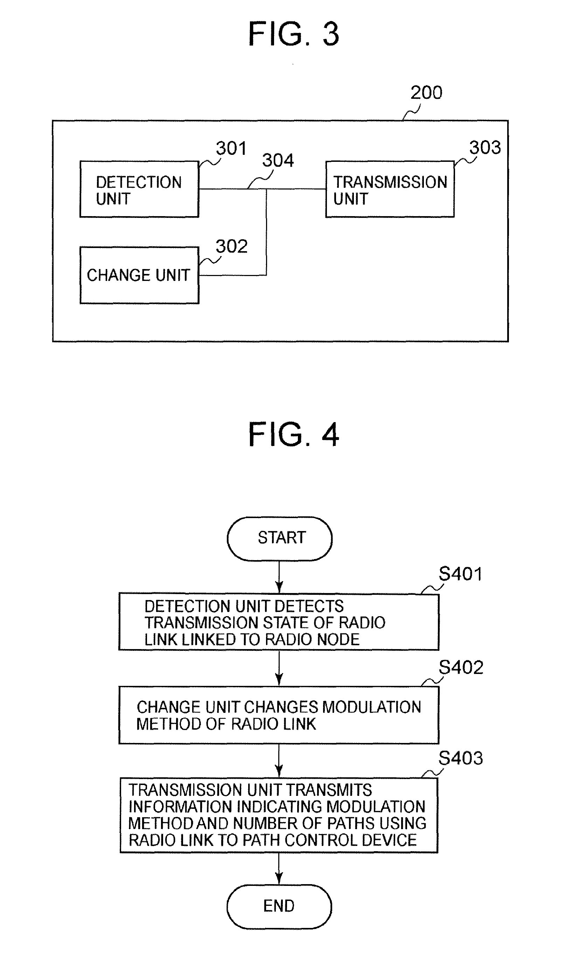

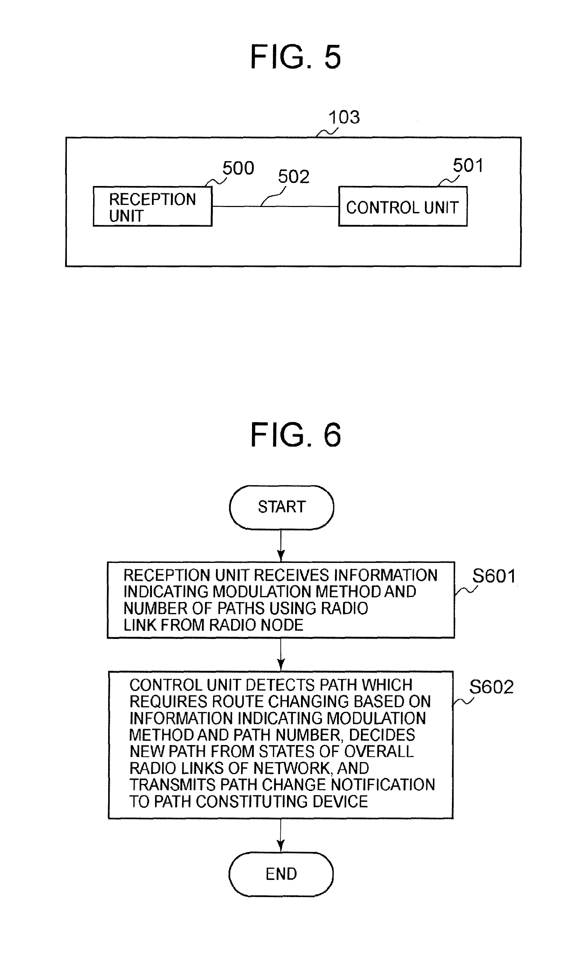

A radio system, a radio node device, and a path control device according to an embodiment of the invention will be explained with reference to FIGS. 1 to 6. FIG. 1 is a diagram for explaining the structure of the radio system according to the embodiment of the invention. FIG. 2 is a sequence chart for explaining an example of the flow of path constituting in the radio system of the embodiment of the invention. FIG. 3 is a diagram for explaining the structure of the radio node according to the embodiment of the invention. FIG. 4 is a flowchart for explaining an example of the flow of a process of changing a modulation method of the radio node of the embodiment of the invention. FIG. 5 is a diagram for explaining the structure of the path control device according to the embodiment of the invention. FIG. 6 is a flowchart for explaining an example of a process flow associated with path change in the path control device of the embodiment of the invention.

First, an explanation will be given of the radio system of the embodiment of the invention with reference to FIG. 1. As shown in FIG. 1, a radio system 100 comprises a transmission node 101, reception nodes 102a, 102b, a path control device 103, a path constituting device 104, and radio nodes 200a to 200f. The numbers of those components are not limited to the foregoing numbers. The radio system 100 performs communication by multi-hopping radio links to form a path. Directional radio transmission is performed among the radio nodes 200a to 200f in a point-to-point manner. Because radio transmission is a one-way communication, the radio links among the radio nodes 200a to 200f realize bidirectional communications using two radio communications opposite to each other. A radio link 1 is realized by, for example, utilizing radio transmissions over different frequency bandwidths for a direction from the radio node 200a to the radio node 200b, and a direction from the radio node 200b to the radio node 200a. Configuring all radio links in the same way allows the radio system 100 to have a structure which can be treated as an Ethernet (registered trademark) network like a layer 2.

A path 1 or path 2 is constructed between the transmission node 101 and the reception node 102a or 102b to establish connectivity. The path 1 is constructed between the transmission node 101 and the reception node 102a, the path 2 is constructed between the transmission node 101 and the reception node 102b, and the two paths are independent from each other. Independent information, such as a label and a tag is used from a layer 3 which utilizes the MPLS (Multi Protocol Label Switching) or the tagged-VLAN (Virtual LAN) is used in configuring paths. The use of the label and the tag enables packet transfer in an IP network where packets to be transferred are originally irrelevant to each other, according to predetermined policies. A policy means a network operational policy like QoS, such as delay minimization or securing a band, and balancing a load. It is not possible to execute policy control merely by normal routing which determines a packet transfer route by selecting the shortest route.

The path control device 103 serves to realize a network operation based on a policy. The path control device 103 performs policy control at the time of configuring a path before communication is initiated, and at the time of changing a route when the status of a radio link changes, and transmits a notification of a path change to the path constituting device 104 when the path change has occurred. When receiving the path change notification from the path control device 103, the path constituting device 104 changes the path based on the notification. Note that the path control device 103 itself may execute the process of the path constituting device 104 when the radio system 100 has no path constituting device 104.

Next, an explanation will be given of an example of the flow of path constituting in the radio system according to the embodiment of the invention with reference to FIG. 2. First, an arbitrary radio node 200 detects the transmission state of a radio link linked thereto, changes the modulation method of the radio link based on the detected transmission state of the radio link, and transmits the path control device 103 information indicating the changed modulation method and the number of paths using the radio link whose modulation method is changed (step S201). The radio node 200 represents one radio node in the aforementioned radio node 200a to 200f. Hereinafter, an explanation will be given of the radio node 200 representing the radio nodes 200a to 200f. A process of the radio node 200 will be discussed later. The path control device 103 detects a path which requires route changing based on the transmitted information indicating the changed modulation method and the number of paths using the radio link whose modulation method is changed (step S202), decides a new path from the states of the overall radio links of the network (step S203), and transmits a path change notification to the path constituting device 104 (step S204). The process of the path control device 103 will be discussed later. The path constituting device 104 configures a path based on the path change notification transmitted from the path control device 103.

Next, an explanation will be given of the structure of the radio node according to the embodiment of the invention with reference to FIG. 3. As shown in FIG. 3, the radio node 200 comprises a detection unit 301, a change unit 302, and a transmission unit 303. Those components are equivalent to, for example, a CPU. Those components are connected together by a bus 304. A control program for controlling the operation of the radio node 200 is stored in an unillustrated memory area, and the operation is controlled based on the control program. The radio node 200 has an unillustrated interface for external communication. The detection unit 301 detects the transmission state of a radio link linked to the radio node 200. Specifically, the detection unit 301 detects, for example, the error rate of a packet to be transmitted and received. The change unit 302 changes the modulation method of the radio link based on the transmission state of the radio link detected by the detection unit 301. The change unit 302 is so set as to change the modulation method of the radio link when, for example, the error rate of a packet exceeds a predetermined reference.

There are some modulation methods; for example, there are the slow QPSK (Quadrature Phase Shift Keying) used when the reception state of an electric wave is bad, and the fast 16QAM (16 Quadrature Amplitude Modulation) used when the reception state is good. The transmission unit 303 transmits information indicating the modulation method changed by the change unit 302 and the number of paths using the radio link whose modulation method is changed to the path control device 103. The information indicating the modulation method means information to the effect that the modulation method is changed to a modulation method, such as the aforementioned QPSK and 16QAM. The transmission unit 303 transmits information indicating the modulation method changed by the change unit 302, but in a case where the change unit 302 is not present, the transmission unit 303 may transmit information on the transmission state of the radio link and the number of paths using that radio link to the path control device 103. That is, the transmission unit 303 transmits, for example, information on the error rate of a packet as information on the transmission information of the radio link. In this case, the radio node 200 may receive information indicating a modulation method which is computed by the path control device 103 to be discussed later based on information on the transmission state of the radio link and the number of paths using that radio link from the path control device 103, and change the modulation method based on the received information indicating the modulation method.

Next, an explanation will be given of an example of the flow of a modulation method changing process of the radio node according to the embodiment of the invention with reference to FIG. 4. As shown in FIG. 4, the detection unit 301 detects the transmission state of the radio link linked to the radio node 200 (step S401). The change unit 302 changes the modulation method of the radio link based on the transmission state of the radio link detected by the detection unit 301 (step S402). The transmission unit 303 transmits information indicating the modulation method changed by the change unit 302 and the number of paths using the radio link whose modulation method is changed to the path control device 103 (step S403). As mentioned above, when the change unit 302 is not present and the transmission unit 303 transmits the information on the transmission state of the radio link and the number of paths using that radio link to the path control device 103, the transmission unit 303 transmits the information on the transmission state of the radio link and the number of paths using that radio link to the path control device 103 after step S401.

Next, an explanation will be given of the structure of the path control device according to the embodiment of the invention with reference to FIG. 5. As shown in FIG. 5, the path control device 103 comprises a reception unit 500 and a control unit 501. Those components are equivalent to, for example, a CPU. Those components are connected together by a bus 502. A control program for controlling the operation of the path control device 103 is stored in an unillustrated memory area, and the operation is controlled based on the control program. The path control device 103 has an unillustrated interface for external communication. The reception unit 500 receives information on the modulation method of the radio link changed based on the transmission state of the radio link linked to the radio node 200 and the number of paths using that radio link from the radio node 200.

The control unit 501 detects a path which requires route changing based on the information on the modulation method and the number of paths using the radio link whose modulation method is changed, both received by the reception unit 500, decides a new path from the states of the overall radio links of the network, and transmits a notification to the effect of changing of a path to the path constituting device 104. As mentioned above, when the reception unit 500 receives information on the transmission state of the radio link linked thereto and the number of paths using that radio link from the radio node 200, the control unit 501 may compute the modulation method based on the received information. At this time, the control unit 501 may return information indicating the computed modulation method to the radio node 200. This allows the radio node 200 to change the modulation method to a new modulation method. When the radio system 100 has no path constituting device 104, the control unit 501 may reconfigure a path, in place of the path constituting device 104.

Next, an explanation will be given of an example of the flow of a process associated with path changing of the path control device according to the embodiment of the invention with reference to FIG. 6. As shown in FIG. 6, the reception unit 500 receives information indicating the modulation method of a radio link changed based on the transmission state of the radio link linked to the radio node 200 and the number of paths using that radio link from the radio node 200 (step S601). The control unit 501 detects a path which requires route changing based on the information indicating the modulation method and the number of paths using the radio link whose modulation method is changed, both received by the reception unit 500, decides a new path from the states of the overall radio links of the network, and transmits a path change notification to the path constituting device 104 (step S602).

When the reception unit 500 receives the information on the transmission state of the radio link linked to the radio node 200 and the number of paths using that radio link from the radio node 200 in the step S601, the control unit 501 computes a modulation method based on the information on the transmission state of the radio link and the number of paths using that radio link, detects a path which requires route changing based on the computed modulation method, decides a new path from the states of the overall radio links of the network, and transmits a path change notification to the path constituting device 104 in the step S602. At this time, the control unit 501 may return information indicating the computed modulation method to a corresponding radio node 200.
Each of the functional blocks used in the explanation of the embodiment is typically realized by an LSI which is an integrated circuit. Those functional blocks may be separately integrated into a single chip, or may be integrated as a single chip in such a manner as to include some or all of the functional blocks. The LSI here may be called an IC, a system LSI, a super LSI, or an ultra LSI depending on the difference in integration density. The scheme of integration is not limited to an LSI, and may be realized by an exclusive circuit or a general-purpose processor. An FPGA (Field Programmable Gate Array) programmable after an LSI is manufactured, or a reconfigurable processor which enables reconfiguration of the connections and settings of circuit cells in an LSI may be used. Further, if there appears an integration technique which replaces an LSI due to the advancement of the semiconductor technology, or another technology derived from the semiconductor technology, it is needles to say that the functional blocks may be integrated using that technology. For example, application of a biotechnology may be possible.

### INDUSTRIAL APPLICABILITY

Because the radio system, the radio node device, and the path control device according to the invention can reconfigure a path corresponding to fluctuation of a bandwidth originating from a change in the transmission environment of a radio link, the invention is useful for a radio system that constitutes a wireless LAN that multi-hops among a plurality of radio node devices which perform point-to-point radio communications, a radio node device, a path control device, and the like.

## Claims

1. A radio system comprising a plurality of radio node devices and a path control device which controls path constituting based on transmission states of radio links among the plurality of radio node devices, and performing multi-hop communication among the plurality of radio node devices, wherein
an arbitrary radio node device in the plurality of radio node devices detects the transmission state of the radio link linked to the arbitrary radio node device, changes a modulation method of the radio link based on the detected transmission state of the radio link, and transmits information indicating the changed modulation method and the number of paths using the radio link whose modulation method is changed to the path control device, and
the path control device detects a path which requires route changing based on the transmitted information indicating the modulation method and the number of paths using the radio link whose modulation method is changed, and decides a new path from states of the overall radio links.

2. A radio system comprising a plurality of radio node devices and a path control device which controls path constituting based on transmission states of radio links among the plurality of radio node devices, and performing multi-hop communication among the plurality of radio node devices, wherein
an arbitrary radio node device in the plurality of radio node devices detects the transmission state of the radio link linked to the arbitrary radio node device, and transmits information on the detected transmission state of the radio link and the number of paths using the radio link whose transmission state is detected to the path control device, and
the path control device detects a path which requires route changing based on the transmitted information on the transmission state of the radio link and the number of paths using the radio link whose transmission state is detected, and decides a new path from states of the overall radio links.

3. An arbitrary radio node device in a plurality of radio node devices in a radio system which includes the plurality of radio node device, and a path control device controlling path constituting based on transmission states of radio links among the plurality of radio node devices, and performs multi-hop communication among the plurality of radio node devices, comprising:
detection means that detects the transmission state of the radio link linked to the arbitrary radio node device;
change means that changes a modulation method of the radio link based on the transmission state of the radio link detected by the detection means; and
transmission means that transmits information indicating the modulation method changed by the change means, and the number of paths using the radio link whose modulation method is changed to the path control device.

4. An arbitrary radio node device in a plurality of radio node devices of a radio system which includes the plurality of radio node device, and a path control device controlling path constituting based on transmission states of radio links among the plurality of radio node devices, and performs multi-hop communication among the plurality of radio node devices, comprising:
detection means that detects the transmission state of the radio link linked to the arbitrary radio node device; and
transmission means that transmits information on the transmission state of the radio link detected by the detection means, and the number of paths using the radio link whose transmission state is detected to the path control device.

5. A path control device in a radio system which includes a plurality of radio node devices and the path control device controlling path constituting based on transmission states of radio links among the plurality of radio node devices, and performs multi-hop communication among the plurality of radio node devices, comprising:
reception means that receives information indicating a modulation method of the radio link changed based on the transmission state of the radio link linked to the radio node device and the number of paths using the radio link whose modulation method is changed from the radio node device; and
control means that detects a path which requires route changing based on the received information indicating the modulation method and the number of paths using the radio link whose modulation method is changed, and decides a new path from states of the overall radio links.

6. A path control device in a radio system which includes a plurality of radio node devices and the path control device controlling path constituting based on transmission states of radio links among the plurality of radio node devices, and performs multi-hop communication among the plurality of radio node devices, comprising:
reception means that receives from the radio node device information on the transmission state of the radio link, linked to the radio node device and detected by the radio node device, and the number of paths using the radio link whose transmission state is detected; and
control means that detects a path which requires route changing based on the information on the transmission state of the radio link and the number of paths using the radio link whose transmission state is detected, received by the reception means, and decides a new path from states of the overall radio links.
